# EUROPÄISCHE PATENTSCHRIFT

(11) **EP 3 446 320 B1**
(45) Veröffentlichungstag und Bekanntmachung des Hinweises auf die Patenterteilung: **08.03.2023**
(21) Anmeldenummer: 17719227.5
(22) Anmeldetag: 20.04.2017
(51) Int. Cl.: H01F 27/38, H02J 3/01, H02M 7/5387, H02J 9/08, H02J 3/38, H02M 1/12, F03D 9/00, H01F 41/02, H01F 27/24, H01F 37/00

(54) **DREHSTROMDROSSELSPULE**
THREE-PHASE CHOKE COIL
BOBINE D'INDUCTANCE TRIPHASÉE

(30) Priorität: 20.04.2016 DE 102016107295
(43) Veröffentlichungstag der Anmeldung: 27.02.2019
(73) Patentinhaber: Wobben Properties GmbH, 26607 Aurich (DE)
(72) Erfinder: WILHELM, Juri, 26605 Aurich (DE); SCHROBSDORFF, Simon, 26556 Eversmeer (DE)
(74) Vertreter: Eisenführ Speiser
(86) Internationale Anmeldenummer: PCT/EP2017/059337
(87) Internationale Veröffentlichungsnummer: WO 2017/182544

(56) Entgegenhaltungen:
- EP-A1- 0 117 460
- DE-A1- 19 908 124
- DE-A1-102012 207 557
- US-A- 2 212 543

## Beschreibung

Die vorliegende Erfindung betrifft eine elektromagnetische Drehstromdrosselspule zur Verwendung in einem Stromsystem mit drei Phasen. Weiterhin betrifft die vorliegende Erfindung eine elektrische Erzeugereinheit umfassend wenigstens einen Wechselrichter und eine mit dem Wechselrichter verschaltete elektromagnetische Drehstromdrosselspule sowie eine Windenergieanlage umfassend wenigstens eine erfindungsgemäße elektromagnetische Drehstromdrosselspule. Ferner betrifft die vorliegende Erfindung ein Verfahren zur Auslegung einer solchen Drehstromdrosselspule.

Elektromagnetische Drehstromdrosselspulen, die auch vereinfacht nur als Drosseln bezeichnet werden und zur Begrenzung von Strömen in elektrischen Leitungen, zur Zwischenspeicherung von Energie, zur Impedanzanpassung und/oder zur Filterung verwendet werden, sind allgemein bekannt.

Üblicherweise werden Drehstromdrosselspulen, im Gegensatz zu Transformatoren oder Schwingkreisinduktivitäten, zu anderen elektromagnetischen Bauteilen und/oder Verbrauchern in Serie verschaltet und weisen zumeist einen dreischenkligen magnetischen Kern auf, der auch vereinfacht als Kern oder Magnetkern bezeichnet wird.

Aufgrund der zunehmenden Leistungsgröße von elektrischen Bauteilen im Bereich der Leistungselektronik können schon kleinste bauliche Unsymmetrien, insbesondere im Bereich der Drehstromdrosselspulen, zu einer unzulässigen oder zumindest unerwünschten Erwärmung derselben führen.

Das Deutsche Patent- und Markenamt hat in der Prioritätsanmeldung zur vorliegenden Anmeldung folgenden Stand der Technik recherchiert: DE 28 42 121 A1; US 2015/0123479 A1; US 2,212,543 A; EP 2 088 603 A2. US 2,212,543 A offenbart eine elektromagnetische Drehstromdrosselspule gemäß Oberbegriff von Anspruch 1. Weitere Drehstromdrosselspulen sind in DE 10 2012 207 557 A1, DE 199 08 124 A1 und EP 0 117 460 A1 offenbart.

Aufgabe der vorliegenden Erfindung ist es daher, wenigstens eines der vorgenannten Probleme zu adressieren. Insbesondere soll eine Lösung vorgeschlagen werden, die eine möglichst gleichmäßige Erwärmung des Drosselkerns bzw. der Drehstromdrosselspule ermöglicht. Zumindest soll gegenüber dem bisher Bekannten eine alternative Lösung vorgeschlagen werden.

Erfindungsgemäß wird eine elektromagnetische Drehstromdrosselspule zur Verwendung in einem Stromsystem mit drei Phasen nach Anspruch 1 vorgeschlagen.

Der ferromagnetische Drosselkern der elektromagnetischen Drehstromdrosselspule besteht hierbei im Wesentlichen aus einem magnetisch-leitfähigen Material, wie beispielsweise Eisen oder Mangan-Zink-Ferrit, und ist fünfschenklig ausgebildet. Die Kernschenkel bilden also zusammen mit den Rückflussschenkeln einen gemeinsamen magnetischen Kreis aus.

Die Symmetrierungswicklungen werden dabei so auf den Rückflussschenkeln angeordnet, dass die zwei Rückflussschenkel dazu vorbereitet sind, die unsymmetrischen Magnetkomponenten so zu führen, dass es innerhalb des Drosselkerns zu einer gleichmäßigeren Erwärmung kommt.

Erfindungsgemäß wurde nämlich in einem ersten Schritt versucht, bekannten unzulässigen Erwärmungen mit einer baulichen Veränderung des magnetischen Kerns entgegenzuwirken, insbesondere wurde der magnetische Kern der Drehstromdrossel fünfschenklig symmetrisch ausgeführt.

Bei diesen Prototypen der Fünfschenkeldrossel kam es aber weiterhin zu unzulässigen Erwärmungen, insbesondere stellte sich Temperaturunterschiede von mehr als 20 Kelvin zwischen dem ersten und dem fünften Schenkel ein.

Erfindungsgemäß wurde erkannt, dass der magnetische Fluss im magnetischen Kern der fünfschenkligen Drehstromdrosselspule sich nicht gleichmäßig auf den ersten und fünften Schenkel des Drosselkerns verteilt, sondern infolge von Fertigungstoleranzen sich zunächst den Weg des geringsten Widerstandes sucht und demnach die Schenkel unterschiedlich erwärmt.

Dadurch, dass die zwei Rückflussschenkel des ferromagnetischen Drosselkerns die Symmetrierungswicklungen aufweisen, konnte diesem Problem besser begegnet werden. Diese zusätzliche Bewicklung kann einer ungleichen Verteilung der Magnetflüsse entgegen wirken.

Die drei Primärwicklungen der Kernschenkel, also die drei mittleren Schenkel, führen jeweils eine Phase des dreiphasigen Stromsystems. Eine Verschaltung der drei Primärwicklungen, die auch als Drehstromwicklungen bezeichnet werden, mit den drei Phasen des dreiphasigen Stromsystems kann beispielsweise mittels Klemmen oder Schienen realisiert werden. Hierbei führt jede Drehstromwicklung genau eine Phase des dreiphasigen Stromsystems.

Die zwei Rückflussschenkel, also die äußeren Schenkel des ferromagnetischen Drosselkerns, weisen jeweils eine Symmetrierungswicklung auf, welche passiv ausgeführt ist. Die Symmetrierungswicklungen werden also nicht aktiv bestromt, wie beispielsweise die Drehstromwicklungen. Zudem sind die Symmetrierungswicklungen dazu vorbereitet, die in den Rückflussschenkeln auftretenden magnetischen Flüsse zu symmetrieren, insbesondere den magnetischen Fluss des ferromagnetischen Drosselkerns zu symmetrieren.

Im Bereich der Leistungselektronik ist eine solche passive Ausführung der Symmetrierungswicklungen besonders vorteilhaft, da eine passive Bewicklung gegenüber einer aktiven Bestromung der Symmetrierungswicklungen einen besseren Wirkungsgrad der elektromagnetischen Drehstromdrosselspule bedeuten kann.

Die zwei Rückflussschenkel bilden somit einen Teil des magnetischen Kreises, also des ferromagnetischen Drosselkerns, wobei die zwei Symmetrierungswicklungen der beiden Rückflussschenkel so gewickelt und miteinander in Reihenschaltung verschaltet sind, dass ein erster sich ändernder magnetischer Fluss in einem der beiden Rückflussschenkel einen zweiten magnetischen Fluss in dem anderen Rückflusschenkel so induziert, dass der zweite magnetische Fluss dem sich ändernden magnetischen Fluss entgegengesetzt ist.

Die beiden Symmetrierungswicklungen sind also so verschaltet, dass sie gleichsinnig vom Strom durchflossen werden, der durch das dreiphasige Stromsystem in den beiden Symmetrierungswicklungen induziert wird.

Vorzugsweise ist der ferromagnetische Drosselkern der elektromagnetischen Drehstromdrosselspule geblecht oder als Pulverkern ausgeführt.

Der ferromagnetische Drosselkern wird somit entsprechend der Leistungsklasse der elektromagnetischen Drehstromdrosselspule auf eine einfache und zweckmäßige Art und Weise entweder geblecht oder als Pulverkern ausgeführt.

Der Drosselkern besteht dann zum Beispiel aus mehreren längs zum magnetischen Feld liegenden voneinander isolierten Blechen oder aus einem ferromagnetischen Pulver, wie beispielsweise einem Ferrit-Pulver wie Mangan-Zink.

In einer besonders bevorzugten Ausführungsform bildet der ferromagnetische Drosselkern einen geschlossenen magnetischen Kreis und/oder die Rückflussschenkel bilden die äußeren Schenkel des ferromagnetischen Drosselkerns und die Kernschenkel sind geometrisch zwischen den beiden Rückflussschenkeln angeordnet.

Der ferromagnetische Kern weist somit fünf bewickelte Schenkel auf, die magnetisch parallel zueinander angeordnet und über zwei ebenfalls magnetische parallele Joche, insbesondere Querjoche, mechanisch miteinander verbunden sind.

Der ferromagnetische Drosselkern ist dabei ferner symmetrisch so ausgeführt, dass die fünf Schenkel und die zwei Joche gemeinsam in einer Ebene liegen. Eine solche Anordnung bzw. ein so ausgeführter ferromagnetischer Drosselkern wird auch als "flach" bezeichnet.

Besonders vorteilhaft bei einer solchen Ausführung des ferromagnetischen Drosselkerns ist die einfache Art der Herstellung. So können beispielsweise bei einer geblechten Ausführung des ferromagnetischen Drosselkerns, die einzelnen Bleche, die auch als Dynamobleche bezeichnet werden, einfach aus ausgewalztem ferromagnetischem Material ausgestanzt, lackiert und zu einem Kern zusammengeführt werden. Die Lackierung der Bleche dient hierbei in erster Linie der Isolierung der Bleche gegeneinander - also zur Unterdrückung von Wirbelströmen. Ferner kann aber auch die oder eine weitere Lackierung zur Vorbeugung gegen Korrosion auf die Bleche aufgetragen werden.

Vorzugsweise ist die elektromagnetische Drehstromdrosselspule als Leistungsdrossel ausgebildet und/oder als Netzdrossel am Ausgang eines Leistungswechselrichters einer Windenergieanlage vorgesehen und/oder für einen Drehstrom mit einem Strom je Phase von wenigstens 50 Ampere ausgebildet.

Die elektromagnetische Drehstromdrosselspule ist somit für besonders hohe Leistungsklassen vorbereitet und entsprechend so ausgeführt. Mit Ihr kann somit die Einspeisung mittels einer Windenergieanlage verbessert werden.

Erfindungsgemäß wurde nämlich erkannt, dass besonders in diesen Leistungsklassen die zwei Symmetrierungswicklungen der zwei Rückflussschenkel einen besonders hohen Wirkungsgrad der Drehstromdrosselspule erreichen können, insbesondere gegenüber einer aktiven Bestromung der Symmetrierungswicklungen.

Erfindungsgemäß wird ferner auch eine elektrische Erzeugereinheit vorgeschlagen, wobei die elektrische Erzeugereinheit wenigstens einen Wechselrichter mit einem Wechselrichtereingang zum Aufnehmen einer Eingangsgleichspannung von 0,2 bis 2 KV, insbesondere 0,4 bis 1,2 KV und eine mit dem Wechselrichterausgang verschaltete erfindungsgemäße elektromagnetische Drehstromdrosselspule umfasst.

Die elektrische Erzeugereinheit ist somit dazu vorbereitet, mittels eines Wechselrichters, insbesondere eines Leistungswechselrichters, der als Spannungswechselrichter ausgebildet ist, und einer erfindungsgemäßen elektromagnetischen Drehstromdrosselspule in ein elektrisches Netz einzuspeisen, insbesondere in die Mittelspannungsebene eines Versorgungsnetzes.

Vorzugsweise weist der Wechselrichter einen Gleichspannungszwischenkreis auf und die elektromagnetische Drehstromdrosselspule ist mittels einer Rückführung mit dem Gleichspannungszwischenkreis gekoppelt.

Vorzugsweise umfasst die elektrische Erzeugereinheit ferner einen am Wechselrichterausgang verschaltetes elektromagnetisches Filter, wobei wenigstens eine Wicklung der elektromagnetischen Drehstromdrosselspule mit dem elektromagnetischen Filter verschaltet ist. Damit kann eine unsymmetrische Komponente, die an einem Sternpunkt des Filters auftritt, über die Drehstromdrosselspule zum Gleichspannungszwischenkreis geführt werden, um dadurch die Filterwirkung zu verbessern.

Erfindungsgemäß wird ferner eine Windenergieanlage mit wenigstens einer elektromagnetischen Drehstromdrosselspule gemäß wenigstens einer der vorstehend genannten Ausführungsformen und/oder mit wenigstens einer elektrischen Erzeugereinheit gemäß wenigstens einer vorstehend genannten Ausführungsformen vorgeschlagen.

Die Windenergieanlage weist somit eine elektromagnetische Drehstromdrosselspule zum Einspeisen eines elektrischen Stromes in ein Versorgungsnetz auf.

Besonders vorteilhaft hierbei ist, dass die hohen Anforderungen des Versorgungsnetzbetreibers bezüglich der Stromqualität auf eine einfache und zweckmäßige Weise erfüllt werden können.

Üblicherweise weisen Windenergieanlagen auf Grund ihrer hohen Nennleistung eine Vielzahl von parallel geschalteten Wechselrichtern auf, die eine Induktivität benötigen, welche im Nullsystem des dreiphasigen Drehstromsystems wirkt, diese wird auch als Nullinduktivität bezeichnet. Die bisher bekannten Drosselspulen, die beispielsweise vierschenklig ausgeführt sind, lösen diese Aufgabe nur unzureichend, insbesondere weisen sie eine zu ungleichmäßige Erwärmung auf.

Erfindungsgemäß wird ferner ein Verfahren nach Anspruch 11 zur Auslegung der elektromagnetischen Drehstromdrosselspule zur Verwendung in einem Stromsystem mit drei Phasen vorgeschlagen.

In einem ersten Schritt wird die maximal zu übertragende Leistung bestimmt und die Drossel entsprechend dieser bestimmten Leistung ausgebildet. Bevorzugt erfolgt die Dimensionierung des ferromagnetischen Drosselkerns und der drei Primärwicklungen in Abhängigkeit von Strom, Spannung und Frequenz der maximal zu übertragenden Leistung.

Vorzugsweise erfolgt das Bewickeln der Rückflussschenkel mit ersten Symmetrierungswicklungen derart, dass ein erster sich ändernder magnetischer Fluss in einem ersten der beiden Rückflussschenkel mit einer bezogen auf den magnetischen Kreis ersten Richtung oder Umlaufrichtung über die Symmetrierungswicklungen in dem zweiten der beiden Rückflussschenkel einen zweiten magentischen Fluss mit einer bezogen auf den magnetischen Kreis zweiten Richtung bzw. Umlaufrichtung induziert, die der ersten Richtung bzw. Umlaufrichtung entgegengesetzt ist.

Die zwei Rückflussschenkel werden mit jeweils einer ersten Symmetrierungswicklung bewickelt, die auch als Testwicklung bezeichnet werden können. Die Bewicklung erfolgt dabei insbesondere unter Berücksichtigung einer ersten Abschätzung so, dass die ersten Symmetrierungswicklungen überdimensioniert, insbesondere großzügig, ausgeführt sind. Hierzu kann beispielsweise eine Simulation verwendet werden. Anschließend kann die Drehstromdrosselspule in den Probetrieb genommen werden, um zu ermitteln ob die Drehstromdrosselspule und/oder die Symmetrierungswicklungen einem Dauerbetrieb stand halten, insbesondere erfolgt dies unter Berücksichtigung der Temperatur und/oder des Stromes an den Rückflussschenkel und/oder der Symmetrierungswicklungen.

Hierzu erfolgt ein gegenseitiges, gleichsinniges in Reihe Verschalten der ersten Symmetrierungswicklungen, und vorzugsweise ein Betreiben, insbesondere Bestromen, der

Primärwicklungen mit einem dreiphasigen Teststromsystem, ein Messen einer Temperatur an wenigstens einem Rückflussschenkel und/oder wenigstens einer Stromstärke einer Symmetrierungswicklung eines Rückflussschenkels und ein Berechnen der zweiten Symmetrierungswicklungen in Abhängigkeit der gemessenen Temperatur und/oder der gemessenen Stroms.

Im Probebetrieb werden die Temperatur und/oder der Strom, also die Stromstärke, wenigstens eines Rückflussschenkels überwacht. Sofern zulässige Grenzwerte für die Temperatur oder den Strom überschritten werden, sind die ersten Symmetrierungswicklungen der Rückflussschenkel zu klein ausgefallen. Aus den Messwerten werden dann die zweiten, insbesondere neuen, Symmetrierungswicklungen berechnet.

Vorzugsweise werden die zuvor beschriebenen Verfahrensschritte der Reihe nach iterativ wiederholt, insbesondere bis die gemessene Temperatur und/oder die gemessene Stromstärke unterhalb eines Maximalwertes und/oder oberhalb eines Minimalwertes liegen.

Die zweiten Symmetrierungswicklungen werden also ebenfalls in Testbetrieb genommen, bestromt und überwacht. Bevorzug wird der Vorgang umfassend den Testbetrieb so lange wiederholt, bis die gemessenen Temperaturen und die gemessenen Stromstärken einen zulässigen Maximalwert nicht überschreiten, aber zugleich nicht wahllos überdimensioniert sind.

Besonders vorteilhaft bei einem solchen Vorgehen ist, dass die einzelnen Fertigungstoleranzen der Drehstromdrosselspule für jede Drehstromdrosselspule einzeln berücksichtigt werden können. Dies schafft sowohl eine hohe Materialeinsparung als auch eine hohe Genauigkeit der Drehstromdrosselspule, insbesondere gegenüber einer Bewicklung, die aus einer Simulation hervorgegangen ist.

Vorzugsweise erfolgt das Betreiben bzw. Bestromen der Primärwicklungen durch eine elektrische Erzeugereinheit, die mehrere Wechselrichter aufweist, die einen gemeinsamen Wechselrichterausgang ausbilden mit der die Drehstromdrosselspule verschaltet wird, oder dass das Bestromen der Primärwicklungen durch eine elektrische Erzeugereinheit gemäß einer vorstehend beschriebenen Ausführungsform erfolgt.

Das Bestromen erfolgt demnach unter hohen Leistungen bzw. mit hohen Strömen, insbesondere durch die elektrische Erzeugereinheit, in der die Drehstromdrosselspule verbaut werden soll.

Besonders vorteilhaft hierbei ist die individuelle Anpassung der Drehstromdrosselspule an die elektrische Erzeugereinheit.

Vorzugweise sind die ersten Symmetrierungswicklungen abhängig einer Fertigungstoleranz des Magnetkerns der Drehstromdrosselspule und/oder einer durch den Verwendungszweck der Drehstromdrosselspule vorgegebenen Induktivität berechnet werden.

Es wurde erkannt, dass sich insbesondere die Fertigungstoleranzen die beispielsweise von einer Qualitätskontrolle protokolliert werden dazu eignen, die Randbedingungen für die zeitlich erste Bewicklung festzulegen.

Unter Fertigungstoleranzen sind im Wesentlichen die Fehlertoleranzen der einzelnen Vorrichtungsteile zu verstehen, wie beispielsweise die Fertigungstoleranz der Dynamobleche des Magnetkerns der Drehstromdrosselspule.

Alternativ, sofern die Fertigungstoleranzen nicht protokolliert werden, kann diese großzügig abgeschätzt und so aufgerundet werden, dass eine maximal zu erwartende Fertigungstoleranz abgeschätzt wird. Die bevorzugte Fertigungstoleranz für ein erfindungsgemäßes Verfahren ist kleiner 1 mm, insbesondere kleiner 0,5 mm.

Ferner kann alternativ auch eine Induktivität vorgegeben werden. Beispielsweise eine, die aus einer Filtereigenschaft bestimmt wird. Es wurde erkannt, dass sofern die Drehstromdrosselspule beispielsweise auf einen Netzfilter aufgeschaltet wird, aus Rückführung zwischen Drehstromdrosselspule und Netzfilter eine Induktivität abgeleitet werden kann, die als Vorgabe für die Auslegung verwendbar ist.

Auch kann die Drehstromdrosselspule für die Bestromung zur Auslegung an eine Vielzahl von Wechselrichtern angeschlossen werden, die beispielsweise parallel betrieben werden.

Vorzugsweise weist der Magnetkern am wenigstens einem Rückflussschenkel einen Luftspalt auf, der im Wesentlichen einer Fertigungstoleranz des Magnetkerns entspricht.

Zur Optimierung des Verfahrens wird vorgeschlagen, die Drossel, also den Prototypen der Drehstromdrosselspule, mit einem Luftspalt zu versehen, der im Wesentlichen einer zu erwartenden Fertigungstoleranz entspricht.

Besonders vorteilhaft hierbei ist, dass die Symmetrierungswicklungen dann auch für den Fall ausgelegt wurden, dass der Magnetkern auf Grund von Fertigungstoleranzen Fehlstellen aufweist, die nicht gewollt sind. Hierdurch wird eine hohe Betriebssicherheit der Drehstromdrossel gewährleistet.

Bevorzug umfasst das Aufbringen der Symmetrierungswicklungen ferner ein Wickeln der Symmetrierungswicklungen und/oder die Wicklungsanzahl und der Leitungsquerschnitt der Symmetrierungswicklung, insbesondere der Symmetrierungswicklungen, werden in Abhängigkeit der gemessenen Stromstärke in der Symmetrierungswicklung bestimmt. Das Aufbringen der Symmetrierungswicklungen erfolgt dann durch manuelles oder maschinelles Wickeln, wobei die Bemessungsgrößen der Symmetrierungswicklungen, insbesondere die Wicklungsanzahl und/oder der Wicklungsquerschnitt bzw. Leiterquerschnitt der Symmetrierungswicklungen, unter Berücksichtigung der gemessenen Stromstärke bestimmt werden.

Die vorliegende Erfindung wird nun nachfolgend exemplarisch anhand von Ausführungsbeispielen unter Bezugnahme auf die begleitenden Figuren näher erläutert:
- Figur 1: zeigt eine perspektivische Ansicht einer Windenergieanlage;
- Figur 2: zeigt schematisch einen ferromagnetischen Kern;
- Figur 3: zeigt schematisch eine erfindungsgemäße elektromagnetische Drehstromdrosselspule gemäß einer Ausführungsform;
- Figur 4: zeigt eine schematische Darstellung einer Verschaltung einer elektromagnetischen Drehstromdrosselspule gemäß einer Ausführungsform der vorliegenden Erfindung;
- Figur 5: zeigt schematisch eine elektrische Erzeugereinheit gemäß einer Ausführungsform der vorliegenden Erfindung;

- Figur 6: zeigt den technischen Effekt einer erfindungsgemäßen elektromagnetischen Drehstromdrosselspule

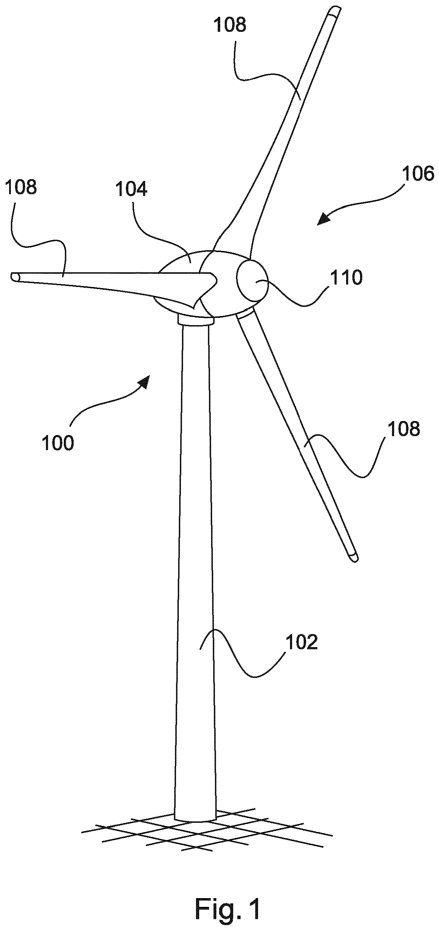

Figur 1 zeigt eine Windenergieanlage 100 mit einem Turm 102 und einer Gondel 104. An der Gondel 104 ist ein Rotor 106 mit drei Rotorblättern 108 und ein Spinner 110 angeordnet. Der Rotor 106 wird im Betrieb durch den Wind in eine Drehbewegung versetzt und treibt dadurch einen Generator in der Gondel 104 an.

Der durch den Wind in eine Drehbewegung versetzte Generator erzeugt einen elektrischen Strom, der mittels wenigstens eines Leistungswechselrichters und/oder wenigstens einer elektromagnetischen Drehstromdrosselspule in ein elektrisches Netz einspeist wird, insbesondere in ein elektrisches Versorgungsnetz eingespeist wird. Insbesondere weisen solche Windenergieanlagen 100 mehrere Leistungswechselrichter auf, die parallel zu einander geschaltet sind.

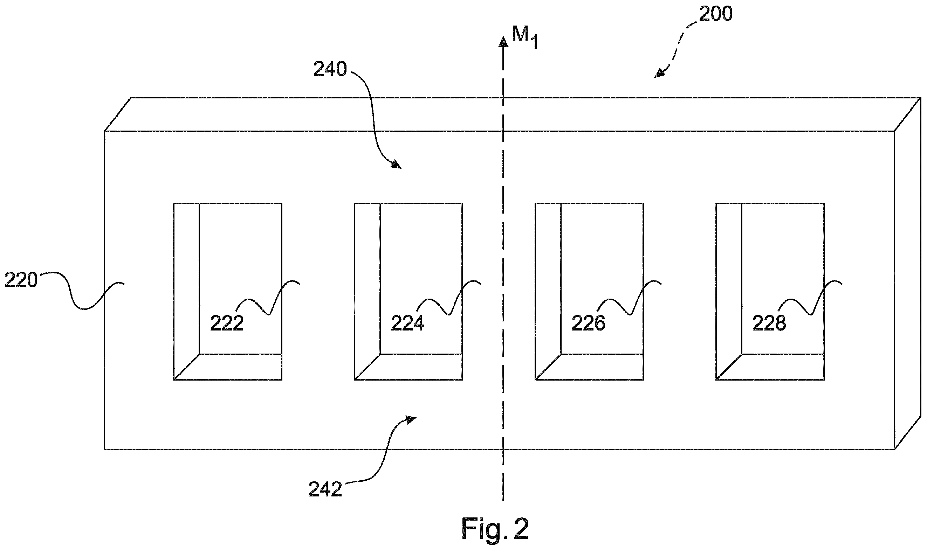

Figur 2 zeigt schematisch und vereinfachend einen ferromagnetischen Kern 200, insbesondere einen Drosselkern einer erfindungsgemäßen elektromagnetischen Drehstromdrosselspule. Der ferromagnetische Kern weist fünf Schenkel 220, 222, 224, 226, 228 auf, die über zwei Joche 240, 242 verbunden sind, die im Wesentlichen orthogonal zu den Schenkel 220, 222, 224, 226, 228 angeordnet sind.

Der Kern weist ferner eine Mittelachse M1 auf. Die fünf Schenkel 220, 222, 224, 226, 228 des ferromagnetischen Kerns 200 sind dabei im Wesentlichen in einer Ebene achsensymmetrisch zu der Mittelachse M1 angeordnet. Zudem weisen die fünf Schenkel 220, 222, 224, 226, 228 des ferromagnetischen Kerns 200 jeweils Mittenachsen auf, die in einer Ebene parallel zueinander verlaufen.

Der ferromagnetische Kern bildet ferner einen im Wesentlichen einteiligen magnetischen Kreis längs der magnetischen Durchflutung aus und ist beispielsweise als Pulverkern aus Mangan-Zink-Ferrit oder einfach geblecht ausgeführt, beispielsweise aus Dynamoblechen. Ein geblechter Aufbau eines ferromagnetischen Kerns 200 eignet sich besonders gut als ferromagnetischer Drosselkern einer elektromagnetischen Drehstromdrosselspule.

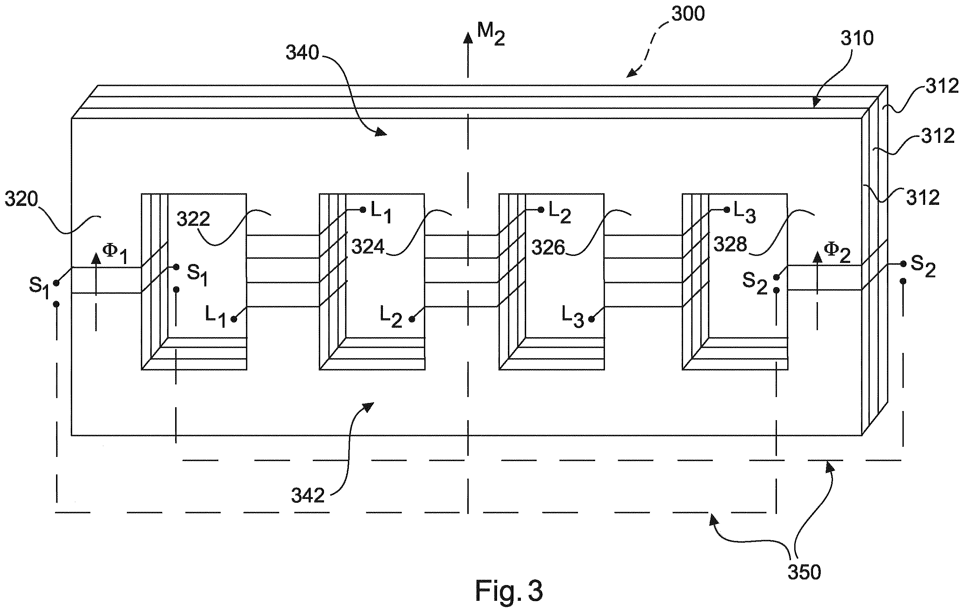

Figur 3 zeigt schematisch eine erfindungsgemäße elektromagnetische Drehstromdrosselspule 300, die einen ferromagnetischen Drosselkern 310 umfasst, der geblecht ausgeführt ist.

Der ferromagnetische Drosselkern 310 weist eine Vielzahl von Elektroblechen bzw. Dynamoblechen 312 auf, die zur magnetischen Durchflutung des ferromagnetischen Drosselkerns 310 längs angeordnet sind.

Ferner ist der ferromagnetische Drosselkern 310 fünfschenklig mit den fünf Schenkeln 320, 322, 324, 326, 328 ausgeführt, wobei die fünf Schenkel 320, 322, 324, 326, 328 mittels zweier Joche 340 und 342 so miteinander verbunden sind, dass der ferromagnetische Drosselkern 310 eine im Wesentlichen flache Bauform aufweist. Der ferromagnetische Drosselkern weist demnach als Kernschenkel drei mittlere Schenkel 322, 324 und 326 und als Rückflussschenkel zwei äußere Schenkel 320 und 328 auf.

Der mittlere Schenkel 324 der Kernschenkel 322, 324 bzw. 326, weist eine Mittelachse M2 auf, welche eine Symmetrieachse M2 für den Drosselkern 310 definiert, wobei die übrigen vier Schenkel 320, 322, 326, 328 im Wesentlichen spiegelsymmetrisch zu der Mittelachse M2 des mittleren Schenkels 324 angeordnet und ausgebildet sind.

Die drei Kernschenkel bzw. mittleren Schenkel 322, 324 und 326 weisen jeweils eine Wicklung L1, L2 und L3 auf, wobei diese drei Wicklungen L1, L2 und L3 jeweils einer Phase eines dreiphasigen Stromsystems zugeordnet sind. Die drei mittleren Schenkel 322, 324, 326 bilden somit die Kernschenkel 322, 324, 326 des ferromagnetischen Drosselkerns aus.

Die zwei Rückflussschenkel bzw. äußeren Schenkel 320 und 328 zum Führen einer unsymmetrischen Magnetkomponente weisen jeweils eine Wicklung S1 und S2 auf. Diese zwei äußeren Schenkel 320 und 328 sind somit jeweils durch eine Wicklung S1 und S2 bewickelt. Die zwei äußeren Schenkel 320 und 328 bilden somit die Rückflussschenkel 320 und 328 des ferromagnetischen Drosselkerns aus und die Wicklungen S1 und S2 werden somit als Symmetrierungswicklungen S1 und S2 bezeichnet.

Die Rückflussschenkel 320 und 328 bilden also die äußeren Schenkel des ferromagnetischen Drosselkerns und die Kernschenkel 322, 324 und 326 sind zwischen den beiden Rückflussschenkeln 320 und 328 angeordnet.

Die Symmetrierungswicklungen S1 und S2 der Rückflussschenkel 320 und 328 sind zudem gleichsinnig miteinander verschaltet, insbesondere so, dass ein erster sich ändernder magnetischer Fluss Φ₁ in einen ersten der beiden Rückflussschenkel 320 oder 328 mit einer bezogen auf den magnetischen Kreis ersten Richtung über die miteinander gleichsinnig verschalteten Symmetrierungswicklungen S1 und S2 in den zweiten der beiden Rückflussschenkel 328 bzw. 320 an den zweiten magnetischen Fluss Φ₂ mit einer bezogen auf den magnetischen Kreis zweiten Richtung induziert, wobei die der ersten Richtung entgegengesetzt ist.

Beispielsweise kann der erste magnetische Fluss Φ₁ in dem Rückflussschenkel 320 fließen und in der Symmetrierungswicklung S1 einen elektrischen, Strom erzeugen.

Dieser so erzeugte elektrische Strom, fließt auch durch die zweite Symmetrierungswicklung S2, nämlich so, dass der zweite magnetische Fluss induziert wird, der, bezogen auf einen magnetischen Kreis, dem ersten Fluss Φ₁ entgegengerichtet ist. In diesem Sinne ist die Figur 3 dargestellt.

Hier weisen die Symmetrierungswicklungen S1 und S2 eine Windungszahl auf, die kleiner ist als die Windungszahl der Wicklungen L1, L2 und L3, die zum Aufnehmen einer der Phasen des dreiphasigen Stromsystems ausgebildet sind. Das wird generell als eine Ausführungsform vorgeschlagen.

Die drei Phasen eines Stromsystems, üblicherweise U, V und W, sind entsprechend an die Wicklungen L1, L2 und L3 der elektromagnetischen Drehstromdrosselspule 300 anzuschließen. Hierfür können beispielsweise Anschlussklemmen oder Schienen an den Enden der Wicklungen L1, L2 und L3 vorgesehen werden.

Erfindungsgemäss wird vorgeschlagen, die Symmetrierungswicklungen S1 und S2 so zu verschalten, wie das in Figur 3 durch die schraffierten Linien 350 dargestellt ist. Hierbei sind die Symmetrierungswicklungen gleichsinnig und so miteinander verschaltet, dass sie die Rückflussschenkel 320 und 328 passiv bewickeln.

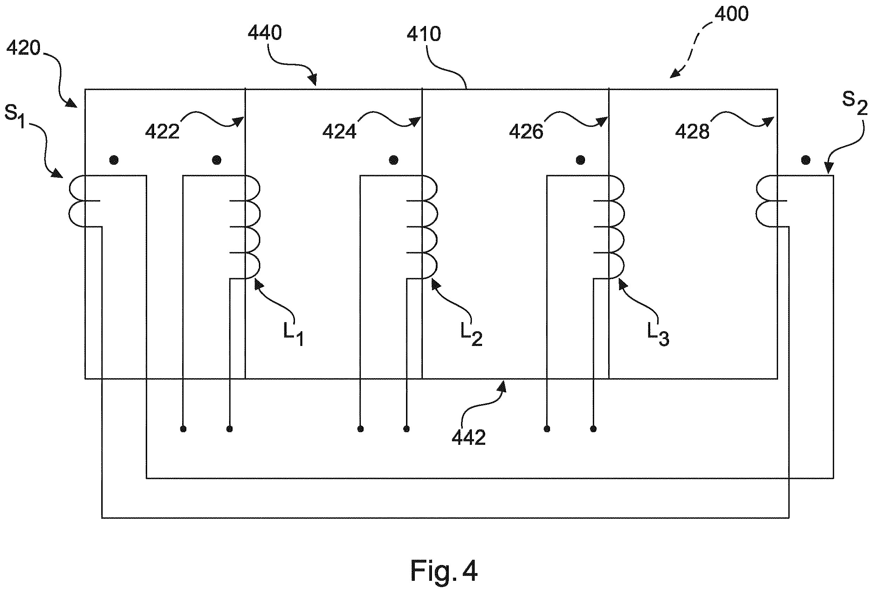

Figur 4 zeigt schematisch und vereinfachend eine bevorzugte Verschaltung der Wicklungen L1, L2, L3, S1, S2 einer erfindungsgemäßen elektromagnetischen Drehstromdrosselspule. Die Wicklungen L1, L2, L2 werden auch als Primärwicklungen oder Drehstromwicklungen L1, L2, L3 bezeichnet und die Wicklungen S1 und S2 als Symmetrierungswicklungen S1 und S2.

Der ferromagnetische Drosselkern 410 mit seinen fünf Schenkeln 420, 422, 424, 426, 428 und zwei Jochen 440, 442 ist gemäß Fig. 2 ausgebildet und aus Gründen der Übersicht nur stark vereinfacht bzw. symbolisch dargestellt.

Die drei mittleren Schenkel, nämlich die Kernschenkel 422, 424, 426 weisen jeweils eine Drehstromwicklung L1, L2, L3 auf, die jeweils eine der drei Phasen eines dreiphasigen Stromsystems führen.

Die beiden äußeren Schenkel, nämlich die Rückflussschenkel 420 und 428 weisen jeweils eine Symmetrierungswicklung S1 und S2 auf, wobei die Symmetrierungswicklung S1 und S2 gleichsinnig miteinander verschaltet sind.

Ferner sind die Symmetrierungswicklungen S1 und S2 miteinander in Reihe so verschaltet, dass sie die Rückflussschenkel jeweils passiv bewickeln. Die Symmetrierungswicklungen S1 und S2 sind also passiv ausgeführt und werden nicht aktiv bestromt, wie beispielsweise die Drehstromwicklungen L1, L2 und L3, durch das dreiphasige Stromsystem.

In einem weiteren Ausführungsbeispiel wird vorgeschlagen, die so ausgeführten Symmetrierungswicklungen S1 und S2 auf ein gemeinsames Potential zu ziehen, insbesondere mittels einer Schutzeinrichtung, um Überströme, die den ferromagnetischen Drosselkern beschädigen könnten, abzuleiten. Dadurch kann ein Schutz der Symmetrierungswicklungen erreicht werden.

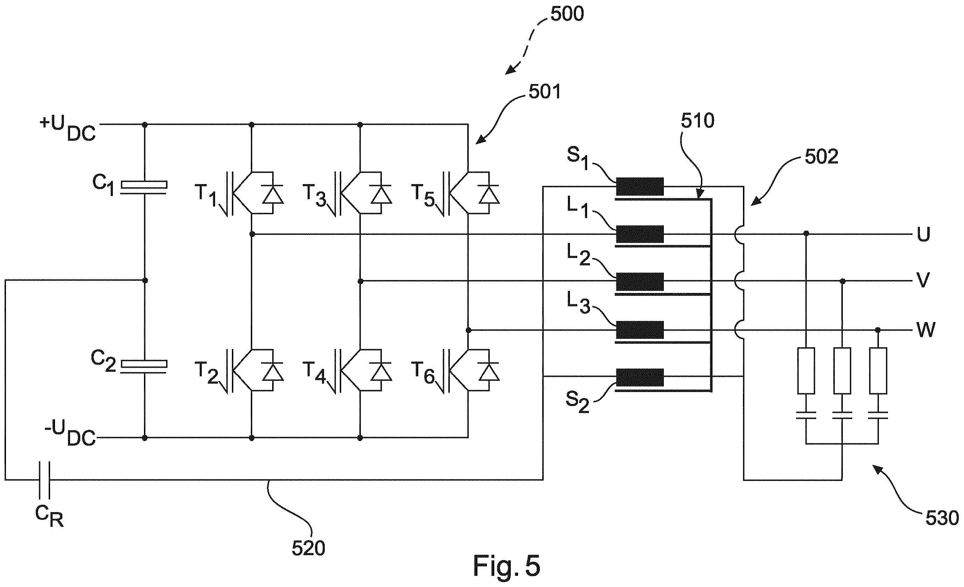

Figur 5 zeigt schematisch eine bevorzugte Ausführungsform einer elektrischen Erzeugereinheit 500, wobei die elektrische Erzeugereinheit wenigstens einen Leistungswechselrichter 501 und eine erfindungsgemäße elektromagnetische Drehstromdrosselspule 502 umfasst.

Der Leistungswechselrichter 501 ist als Spannungswechselrichter ausgebildet und weist eine Eingangsgleichspannung U_{DC} auf, die zwischen 0,2 bis 2 KV, insbesondere 0,4 bis 1,2 KV, liegt.

Die eingangsseitigen Kapazitäten C1 und C2 des Spannungswechselrichter, die auch als Zwischenkreiskondensatoren bezeichnet werden können, bilden einen Teil des Gleichspannungszwischenkreises des Wechselrichters (501) aus und sind dazu vorbereitet, die Eingangsgleichspannung zu glätten und/oder zu speichern, die beispielsweise von einem Gleichrichter erzeugt wird, der durch einen Synchrongenerator einer Windenergieanlage gespeist wird.

Ferner ist der Leistungswechselrichter 501 als Brückenwechselrichter mit sechs Leistungsschaltern, insbesondere Thyristor-Dioden-Schaltungen, T1 bis T6 ausgebildet, wobei jeweils zwei der Leistungsschalter eine erste, zweite bzw. dritte Halbbrücke ausbilden, die jeweils eine Wechselspannung einer ersten, zweiten bzw. dritten Phase U, V bzw. W erzeugt. Wobei die so erzeugten Wechselspannungen im Wesentlichen um 120° Grad zueinander phasenverschoben sind.

Der Leistungswechselrichter 501 weist also an seinem Ausgang eine erste, zweite und dritte Phase U, V und W eines dreiphasigen Stromsystems auf die besonders zum Filtern bzw. Glätten über die elektromagnetische Drehstromdrosselspule 502 geführt werden. Die erfindungsgemäße elektromagnetische Drehstromdrosselspule 502 wird somit mit dem Wechselrichterausgang des Leistungswechselrichters 501 so verschaltet, dass jede Drehstromwicklung L1, L2 und L3 der erfindungsgemäßen elektromagnetischen Drossel 502 jeweils eine Phase U, V und W des durch den Leistungswechselrichter erzeugten dreiphasigen Stromsystems führt. Insbesondere wird die erfindungsgemäße elektromagnetische Drehstromdrosselspule 502 mit Leistungswechselrichter mittels Stromklemmen in Reihe verschaltet, insbesondere so, dass die Wicklung L1 die Phase U, die Wicklung L2 die Phase V und die Wicklung L3 die Phase W führt.

Die Symmetrierungswicklungen S1 und S2 der elektromagnetischen Drehstromdrosselspule 502 sind gleichsinnig miteinander verschaltet, in Reihe miteinander verschaltet, und passiv ausgeführt. Die Symmetrierungswicklungen S1 und S2 sind somit nicht an den Wechselrichter oder andere Strom- oder Spannungsquellen angeschlossen sondern nur miteinander verbunden, um dadurch eine Symmetrierung der magnetischen Flüsse der beiden Rückflussschenkel zu erreichen.

Demnach sind die drei mittleren Kernschenkel der erfindungsgemäßen Drehstromdrosselspule aktiv mit einem dreiphasigen System, insbesondere eine Phase pro Schenkel, bestromt und die zwei äußeren Rückflussschenkel jeweils passiv mit einer Symmetrierungswicklung S1 und S2 bewickelt, wobei die Symmetrierungswicklungen S1 und S2 so ausgeführt sind, dass sie einer thermischen Erwärmung des ferromagnetischen Drosselkerns der erfindungsgemäßen elektromagnetischen Drehstromdrosselspule 502 entgegenwirken bzw. die Erwärmung über den gesamten Kern vergleichmäßigen.

Durch die passive bewickelten Symmetrierungsschenkel wird teilweise einem Magnetfluss entgegen gewirkt. Das führt zu einer Symmetrierung der Magnetischen Flüsse der beiden Symmetrierungsschenkel zueinander, kann aber auch erreichen, dass einem Streufeld der Kernspulen, dass ungewollt über die Symmetrierungsschenkel laufen könnte, entgegengewirkt wird.

Ferner weist die elektrische Erzeugereinheit 500 eine Rückführung 520 auf, über die die elektromagnetische Drehstromdrosselspule 502 über eine Kapazität C_{R} mit dem Gleichspannungszwischenkreis des Wechselrichters 501 gekoppelt ist.

Dabei ist am Wechselrichterausgang ein elektromagnetisches Filter 530 angeordnet, das im Wesentlichen als RC-Glied ausgebildet ist. Das elektromagnetische Filter 530 ist dabei über die Symmetrierungswicklungen S1, S2 mit der elektromagnetischen Drehstromdrosselspule 502 so verschaltet, dass der Filter 530 über die Symmetrierungswicklungen S1, S2 auf den Gleichspannungszwischenkreis des Wechselrichters zurückgeführt wird, nämlich auf einen Mittelabgriff zwischen den beiden Zwischenkreiskondensatoren C₁ und C2.

Eine solche elektrische Erzeugereinheit 500 ist insbesondere dazu geeignet, in bzw. mit einer Windenergieanlage verwendet zu werden, die in die Mittelspannungsebene eines Versorgungsnetzes einspeist. In einem solchen Fall umfasst eine Windenergieanlage eine Vielzahl solcher elektrischer Erzeuger.

Gemäß Fig. 5 ist die erfindungsgemäße elektromagnetische Drehstromdrosselspule als Leistungsdrossel ausgeführt.

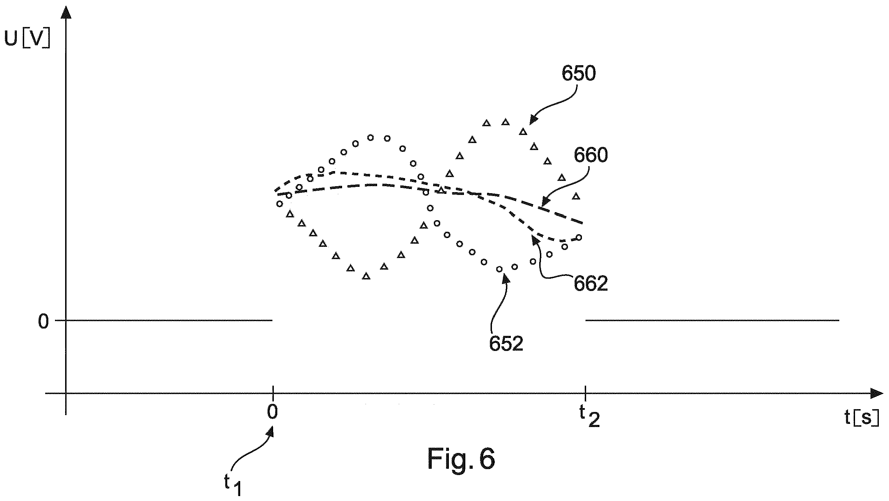

Fig. 6 zeigt den technischen Effekt einer erfindungsgemäßen elektromagnetischen Drehstromdrossel.

Das Diagramm 600 zeigt einen Abtrag der Spannung U über der Zeit t.

Die Kurven 650 und 652 zeigen das Verhalten der induzierten Spannung am ersten 650 und fünften Schenkel 650 einer erfindungsgemäßen Drosselspule ohne die Symmetrierungswicklungen, über einen Zeitraum t₁ bis t₂. Eine solche Ausführungsform einer elektromagnetischen Drehstromdrossel entspricht im Wesentlichen dem obengenannten Prototypen.

Die Kurven 660 und 662 zeigen das Verhalten der induzierten Spannung am ersten 660 und fünften Schenkel 662 einer erfindungsgemäßen Drosselspule gemäß Anspruch 1, also mit Symmetrierungswicklungen S1 und S2, über den Zeitraum t₁ bis t₂.

Die induzierten Spannungen 660 und 662 der erfindungsgemäßen elektromagnetischen Drehstromdrosselspule verlaufen deutlich glatter und gleichmäßiger als die induzierten Spannungen 650 und 652 einer fünfschenkligen Drossel ohne Symmetrierungswicklungen.

Die erfindungsgemäße Drehstromdrosselspule weist somit eine signifikante Verbesserung auf, insbesondere eine signifikante Glättung der induzierten Spannungen, demnach es im Vergleich zu einer fünfschenkligen Drehstromdrosselspule ohne Symmetrierungswicklungen, dem Prototypen, zu einer gleichmäßigeren Materialausnutzung bei verhältnismäßig hoher Nullinduktivität kommt.

## Patentansprüche

1. Elektromagnetische Drehstromdrosselspule (300) zur Verwendung in einem Stromsystem mit drei Phasen (U, V, W), umfassend einen ferromagnetischen Drosselkern (310), drei Primärwicklungen (L1, L2, L3) und zwei Symmetrierungswicklungen (S1, S2), wobei der ferromagnetische Drosselkern
- drei Kernschenkel (322, 324, 326) mit jeweils einer der drei Primärwicklungen (L1, L2, L3) einer der Phasen (U, V, W) und
- zwei Rückflussschenkel (320, 328) zum Führen einer unsymmetrischen Magnetkomponente aufweist,
wobei die zwei Rückflussschenkel (320, 328) passiv bewickelt sind, wobei die drei Kernschenkel (322, 324, 326) jeweils eine der Primärwicklungen (L1, L2, L3) zum Aufnehmen jeweils einer der Phasen (U, V, W) aufweisen und die zwei Rückflussschenkel (320, 328) jeweils mit einer der Symmetrierungswicklungen (S1, S2) passiv bewickelt sind,
**gekennzeichnet dadurch, dass** die Symmetrierungswicklungen (S1, S2) gleichsinnig miteinander in Reihe zu einem geschlossenen Kreis ohne aktive Bestromung verschaltet sind, insbesondere so, dass
- die zwei Symmetrierungswicklungen (S1, S2) der beiden Rückflussschenkel (320, 328) so gewickelt und miteinander in einer Reihenschaltung verschaltet sind, dass
- ein erstersich ändernder magnetischer Fluss (Φ₁) in einem ersten der beiden Rückflussschenkel mit einer bezogen auf einen magnetischen Kreis der Drehstromdrosselspule ersten Richtung oder Umlaufrichtung über die miteinander verschalteten Symmetrierungswicklungen in dem zweiten der beiden Rückflussschenkel einen zweiten magentischen Fluss (Φ₂) mit einer bezogen auf den magnetischen Kreis zweiten Richtung bzw. Umlaufrichtung induziert, die der ersten Richtung bzw. Umlaufrichtung entgegengesetzt ist.

2. Elektromagnetische Drehstromdrosselspule nach einem der vorstehenden Ansprüche, **dadurch gekennzeichnet, dass** der ferromagnetische Drosselkern (310) geblecht oder als Pulverkern ausgeführt ist.

3. Elektromagnetische Drehstromdrosselspule nach einem der vorstehenden Ansprüche, **dadurch gekennzeichnet, dass** der ferromagnetische Drosselkern (310) einen geschlossenen magnetischen Kreis bildet und/oder dass die Rückflussschenkel (320, 328) äußere Schenkel des ferromagnetischen Drosselkerns (310) bilden und die Kernschenkel (322, 324, 326) geometrisch zwischen den beiden Rückflussschenkeln (320, 328) angeordnet sind.

4. Elektromagnetische Drehstromdrosselspule nach einem der vorstehenden Ansprüche, **dadurch kennzeichnet, dass** die elektromagnetische Drehstromdrosselspule als Leistungsdrossel (300) ausgebildet ist und/oder dass die elektromagnetische Drehstromdrossel als Netzdrossel (502) am Ausgang eines Leistungswechselrichters (501) einer Windenergieanlage (100) vorgesehen ist und/oder für einen Drehstrom mit einem Strom je Phase (U, V, W) von wenigstens 50A ausgebildet ist.

5. Elektrische Erzeugereinheit umfassend
- wenigstens einen Wechselrichter (501) mit einem Wechselrichtereingang (U_{DC}) zum Aufnehmen einer Eingangsgleichspannung von 0,2 bis 2kV, insbesondere 0,4 bis 1,2 kV und
- eine mit wenigstens einem Wechselrichterausgang verschaltete elektromagnetische Drehstromdrosselspule (300) gemäß einem der Ansprüche 1 bis 4.

6. Elektrische Erzeugereinheit nach Anspruch 5, **dadurch gekennzeichnet, dass** der Wechselrichter (501) einen Gleichspannungszwischenkreis aufweist und die elektromagnetische Drehstromdrosselspule (502) mittels einer Rückführung (520) mit dem Gleichspannungszwischenkreis gekoppelt ist.

7. Elektrische Erzeugereinheit nach Anspruch 5 oder 6 ferner umfassend
- einen am Wechselrichterausgang verschalteten elektromagnetischen Filter (530), wobei wenigstens eine Wicklung der elektromagnetischen Drehstromdrosselspule (502) mit dem elektromagnetischen Filter (530) verschaltet ist.

8. Elektrische Erzeugereinheit nach einem der Ansprüche 5 bis 7, **dadurch gekennzeichnet, dass** die elektrische Erzeugereinheit mehrere Wechselrichter aufweist, die miteinander parallel verschaltet sind, und die mehreren Wechselrichter einen gemeinsamen Wechselrichterausgang ausbilden, wobei die elektrische Erzeugereinheit eine mit diesem Wechselrichteraugang verschalte elektromagnetische Drehstromdrosselspule (300) gemäß einem der Ansprüche 1 bis 4 umfasst.

9. Elektrische Erzeugereinheit gemäß einem der vorstehenden Ansprüche, **dadurch gekennzeichnet, dass** die elektrische Erzeugereinheit eine Nenn-Leistung von wenigstens 10 kW, vorzugsweise wenigstens 100 kW, insbesondere etwa 300 kW, aufweist.

10. Windenergieanlage (100) umfassend
- wenigstens eine elektromagnetische Drehstromdrosselspule (300) nach einem der Ansprüche 1 bis 4 und/oder
- eine elektrische Erzeugereinheit (500) nach einem der Ansprüche 5 bis 9.

11. Verfahren zur Auslegung einer elektromagnetischen Drehstromdrosselspule (300) nach Anspruch 1 zur Verwendung in einem Stromsystem mit drei Phasen (U, V, W), umfassend die Schritte
- Dimensionieren des ferromagnetischen Drosselkerns (310) und der drei Primärwicklungen (L1, L2, L3) auf eine maximal zu übertragende Leistung abhängig von Strom, Spannung und Frequenz der maximal zu übertragenden Leistung,
- bewickeln der Rückflussschenkel (320, 328) mit jeweils einer ersten genannten Symmetrierungswicklung,
- gegenseitiges gleichsinniges in Reihe Verschalten der ersten Symmetrierungswicklungen.

12. Verfahren gemäß Anspruch 11 wobei das Bewickeln der Rückflussschenkel (320, 328) mit den Symmetrierungswicklungen derart erfolgt, dass ein erster sich ändernder magnetischer Fluss (Φ₁) in einem ersten der beiden Rückflussschenkel mit einer bezogen auf den magnetischen Kreis ersten Richtung oder Umlaufrichtung über die Symmetrierungswicklungen in dem zweiten der beiden Rückflussschenkel einen zweiten magentischen Fluss (Φ₂) mit einer bezogen auf den magnetischen Kreis zweiten Richtung bzw. Umlaufrichtung induziert, die der ersten Richtung bzw. Umlaufrichtung entgegengesetzt ist.

13. Verfahren gemäß Anspruch 12, ferner umfassend die Schritte:
- Betreiben, insbesondere Bestromen, der Primärwicklungen (U, V, W) mit einem dreiphasigen Teststromsystem,
- Messen einer Temperatur an wenigstens einem Rückflussschenkel und/oder wenigstens einer Stromstärke einer genannten Symmetrierungswicklung eines Rückflussschenkels,
- Berechnen zweiter Symmetrierungswicklungen in Abhängigkeit der gemessenen Temperatur und/oder des gemessenen Stroms und
- Ersetzen der ersten Symmetrierungswicklungen durch die zweiten Symmetrierungswicklungem.

14. Verfahren gemäß Anspruch 13, **dadurch gekennzeichnet, dass** die Verfahrensschritte von Anspruch 13 der Reihe nach iterativ wiederholt werden, insbesondere bis die gemessene Temperatur und/oder die gemessene Stromstärke unterhalb eines Maximalwertes und/oder oberhalb eines Minimalwertes liegen.

15. Verfahren gemäß einem der Ansprüche 13 oder 14, **dadurch gekennzeichnet, dass** das Betreiben der Primärwicklungen durch eine elektrische Erzeugereinheit erfolgt, die mehrere Wechselrichter aufweist, die einen gemeinsamen Wechselrichterausgang ausbilden mit der die Drehstromdrosselspule verschaltet wird oder dass das Betreiben der Primärwicklungen durch eine elektrische Erzeugereinheit nach einem der Ansprüche 5 bis 9 erfolgt.

16. Verfahren gemäß einem der Ansprüche 12 bis 15, **dadurch gekennzeichnet, dass** die ersten Symmetrierungswicklungen abhängig von einer Fertigungstoleranz des ferromagnetischen Drosselkerns der Drehstromdrosselspule und/oder einer durch den Verwendungszweck der Drehstromdrosselspule vorgegebenen Induktivität berechnet werden.

17. Verfahren gemäß einem der Ansprüche 11 bis 16, **dadurch gekennzeichnet, dass** der ferromagnetischen Drosselkern an wenigstens einem genannten Rückflussschenkel einen Luftspalt aufweist, der im Wesentlichen einer Fertigungstoleranz des ferromagnetischen Drosselkerns entspricht.

## Claims

1. Electromagnetic three-phase current choke coil (300) for use in a power system having three phases (U, V, W), comprising a ferromagnetic choke core (310), three primary windings (L1, L2, L3) and two circuit-balancing windings (S1, S2), wherein the ferromagnetic choke core has:
- three core members (322, 324, 326) each having one of the three primary windings (L1, L2, L3) of one of the phases (U, V, W), and
- two return flow members (320, 328) for guiding an asymmetrical magnetic component,
wherein the two return flow members (320, 328) are wound in a passive manner, wherein
the three core members (322, 324, 326) each have one of the primary windings (L1, L2, L3) for receiving one of the phases (U, V, W) in each case, and the two return flow members (320, 328) are in each case wound in a passive manner with one of the circuit-balancing windings (S1, S2),
**characterised in that**
the circuit-balancing windings (S1, S2) are connected to each other in the same direction in series to form a closed circuit without active power supply, in particular in such a manner that
- the two circuit-balancing windings (S1, S2) of the two return flow members (320, 328) are wound and connected to each other in series connection in such a manner that
- a first changing magnetic flux (Φ₁) in a first of the two return flow members induces, with a first direction or circulation direction with respect to a magnetic circuit of the three-phase current choke coil via the circuit-balancing windings, which are connected to each other, in the second of the two return flow members a second magnetic flux (Φ₂) with a second direction or circulation direction with respect to the magnetic circuit which is opposed to the first direction or circulation direction.

2. Electromagnetic three-phase current choke coil according to the preceding claim, **characterised in that** the ferromagnetic choke core (310) is laminated or in the form of a powder core.

3. Electromagnetic three-phase current choke coil according to either of the preceding claims, **characterised in that** the ferromagnetic choke core (310) forms a closed magnetic circuit and/or **in that** the return flow members (320, 328) form outer members of the ferromagnetic choke core (310) and the core members (322, 324, 326) are arranged geometrically between the two return flow members (320, 328).

4. Electromagnetic three-phase current choke coil according to any one of the preceding claims, **characterised in that** the electromagnetic three-phase current choke coil is in the form of a power choke (300) and/or **in that** the electromagnetic three-phase current choke coil is provided as a network choke (502) at the output of a power inverter (501) of a wind turbine (100) and/or is constructed for a three-phase current having one current for each phase (U, V, W) of at least 50 A.

5. Electrical generator unit comprising
- at least one inverter (501) having an inverter input (U_{DC}) for receiving an input direct-current voltage of from 0.2 to 2 kV, in particular from 0.4 to 1.2 kV, and
- an electromagnetic three-phase current choke coil (300) which is connected to at least one inverter output according to any one of claims 1 to 4.

6. Electrical generator unit according to claim 5, **characterised in that** the inverter (501) has a direct-current voltage intermediate circuit and the electromagnetic three-phase current choke coil (502) is coupled by means of a return (520) to the direct-current voltage intermediate circuit.

7. Electrical generator unit according to claim 5 or 6, further comprising
- an electromagnetic filter (530) which is connected to the inverter output, wherein at least one winding of the electromagnetic three-phase current choke coil (502) is connected to the electromagnetic filter (530).

8. Electrical generator unit according to any one of claims 5 to 7, **characterised in that** the electrical generator unit has a plurality of inverters which are connected in parallel with each other, and the plurality of inverters form a common inverter output, wherein the electrical generator unit comprises an electromagnetic three-phase current choke coil (300) which is connected to this inverter output according to any one of claims 1 to 4.

9. Electrical generator unit according to any one of the preceding claims, **characterised in that** the electrical generator unit has a nominal power of at least 10 kW, preferably at least 100 kW, in particular approximately 300 kW.

10. Wind turbine (100) comprising
- at least one electromagnetic three-phase current choke coil (300) according to any one of claims 1 to 4, and/or
- an electrical generator unit (500) according to any one of claims 5 to 9.

11. Method for configuring an electromagnetic three-phase current choke coil (300) according to claim 1 for use in an electrical power system having three phases (U, V, W), comprising the steps of
- sizing the ferromagnetic choke core (310) and the three primary windings (L1, L2, L3) for a maximum power which is intended to be transmitted in accordance with current, voltage and frequency of the maximum power which is intended to be transmitted,
- winding a first mentioned circuit-balancing winding around the return flow members (320, 328) in each case,
- mutual series connection of the first circuit-balancing windings in the same direction.

12. Method according to claim 11, wherein the
- winding of the circuit-balancing windings around the return flow members (320, 328) is carried out in such a manner that
- a first changing magnetic flux (Φ₁) in a first of the two return flow members induces, with a first direction or circulation direction with respect to the magnetic circuit via the circuit-balancing windings in the second of the two return flow members, a second magnetic flux (Φ₂) with a second direction or circulation direction, with respect to the magnetic circuit, which is opposed to the first direction or circulation direction.

13. Method according to claim 12, further comprising the steps of:
- operating, in particular supplying power to, the primary windings (U, V, W) with a three-phase test power system,
- measuring a temperature in at least one return flow member and/or at least one current strength of a mentioned circuit-balancing winding of a return flow member,
- calculating second circuit-balancing windings depending on the measured temperature and/or the measured current, and
- replacing the first circuit-balancing windings with the second circuit-balancing windings.

14. Method according to claim 13,
**characterised in that** the method steps of claim 13 are sequentially repeated iteratively, in particular until the measured temperature and/or the measured current strength are below a maximum value and/or above a minimum value.

15. Method according to either claim 13 or claim 14, **characterised in that** the operation of the primary windings is carried out by means of an electrical generator unit which has a plurality of inverters which form a common inverter output and to which the three-phase current choke coil is connected or **in that** the operation of the primary windings by means of an electrical generator unit is carried out in accordance with any one of claims 5 to 9.

16. Method according to any one of claims 12 to 15, **characterised in that** the first circuit-balancing windings are calculated in accordance with a production tolerance of the ferromagnetic choke core of the three-phase current choke coil and/or an inductivity which is predetermined by the application of the three-phase current choke coil.

17. Method according to any one of claims 11 to 16, **characterised in that** the ferromagnetic throttle core has in at least one mentioned return flow member an air gap which substantially corresponds to a production tolerance of the ferromagnetic throttle core.

## Revendications

1. Bobine d'arrêt triphasée électromagnétique (300) destinée à être utilisée dans un système de courant à trois phases (U, V, W), comprenant un noyau de bobine d'arrêt (310) ferromagnétique, trois enroulements primaires (L1, L2, L3) et deux enroulements de symétrisation (S1, S2), dans laquelle le noyau de bobine d'arrêt ferromagnétique présente
- trois branches de noyau (322, 324, 326) avec respectivement un des trois enroulements primaires (L1, L2, L3) d'une des phases (U, V, W), et
- deux branches de retour (320, 328) pour guider une composante magnétique asymétrique,
dans laquelle les deux branches de retour (320, 328) sont enroulées de manière passive, dans laquelle les trois branches de noyau (322, 324, 326) présentent respectivement un des enroulements primaires (L1, L2, L3) pour accueillir respectivement une des phases (U, V, W) et les deux branches de retour (320, 328) sont enroulées de manière passive respectivement avec un des enroulements de symétrisation (S1, S2)
**caractérisée en ce que**
les enroulements de symétrisation (S1, S2) sont branchés dans le même sens l'un à l'autre en série en un circuit fermé sans alimentation en courant active, en particulier de telle sorte que
- les deux enroulements de symétrisation (S1, S2) des deux branches de retour (320, 328) sont enroulés et sont branchés l'un à l'autre dans un circuit en série de telle sorte que
- un premier flux magnétique variable (Φ₁) dans une première des deux branches de retour avec une première direction ou direction périphérique par rapport à un circuit magnétique de la bobine d'arrêt triphasée induit, par l'intermédiaire des enroulements de symétrisation branchés l'un à l'autre dans la seconde des deux branches de retour, un deuxième flux magnétique (Φ₂) avec une deuxième direction ou direction périphérique par rapport au circuit magnétique, qui est opposée à la première direction ou direction périphérique.

2. Bobine d'arrêt triphasée électromagnétique selon la revendication précédente, **caractérisée en ce que** le noyau de bobine d'arrêt ferromagnétique (310) est feuilleté ou est réalisé avec un noyau de poudre.

3. Bobine d'arrêt triphasée électromagnétique selon l'une quelconque des revendications précédentes, **caractérisée en ce que** le noyau de bobine d'arrêt ferromagnétique (310) forme un circuit magnétique fermé, et/ou que les branches de retour (320, 328) forment des branches extérieures du noyau de bobine d'arrêt ferromagnétique (310) et les branches de noyau (322, 324, 326) sont disposées de manière géométrique entre les deux branches de retour (320, 328).

4. Bobine d'arrêt triphasée électromagnétique selon l'une quelconque des revendications précédentes, **caractérisée en ce que** la bobine d'arrêt triphasée électromagnétique est réalisée en tant que bobine d'arrêt de puissance (300), et/ou que la bobine d'arrêt triphasée électromagnétique est prévue en tant que bobine d'arrêt à courant de réseau (502) sur la sortie d'un onduleur de puissance (501) d'une éolienne (100) et/ou est réalisée pour un courant triphasé avec un courant par phase (U, V, W) d'au moins 50 A.

5. Unité génératrice électrique comprenant
- au moins un onduleur (501) avec une entrée d'onduleur (U_{DC}) pour accueillir une tension continue d'entrée de 0,2 à 2 kV, en particulier de 0,4 à 1,2 kV, et
- une bobine d'arrêt triphasée électromagnétique (300) selon l'une quelconque des revendications 1 à 4 branchée avec au moins une sortie d'onduleur.

6. Unité génératrice électrique selon la revendication 5, **caractérisée en ce que** l'onduleur (501) présente un circuit intermédiaire de tension continue et la bobine d'arrêt triphasée électromagnétique (502) est couplée au circuit intermédiaire de tension continue au moyen d'un retour (520).

7. Unité génératrice électrique selon la revendication 5 ou 6, comprenant en outre :
- un filtre électromagnétique (530) branché sur la sortie d'onduleur, dans laquelle au moins un enroulement de la bobine d'arrêt triphasée électromagnétique (502) est branché au filtre électromagnétique (530).

8. Unité génératrice électrique selon l'une quelconque des revendications 5 à 7, **caractérisée en ce que** l'unité génératrice électrique présente plusieurs onduleurs, qui sont branchés de manière parallèle les uns aux autres et les plusieurs onduleurs réalisent une sortie d'onduleur commune, dans laquelle l'unité génératrice électrique comprend une bobine d'arrêt triphasée électromagnétique (300) selon l'une quelconque des revendications 1 à 4 branchée à ladite sortie d'onduleur.

9. Unité génératrice électrique selon l'une quelconque des revendications précédentes, **caractérisée en ce que** l'unité génératrice électrique présente une puissance nominale d'au moins 10 kW, de préférence d'au moins 100 kW, en particulier d'environ 300 kW.

10. Eolienne (100) comprenant
- au moins une bobine d'arrêt triphasée électromagnétique (300) selon l'une quelconque des revendications 1 à 4, et/ou
- une unité génératrice électrique (500) selon l'une quelconque des revendications 5 à 9.

11. Procédé de conception d'une bobine d'arrêt triphasée électromagnétique (300) selon la revendication 1 destinée à être utilisée dans un système de courant à trois phases (U, V, W), comprenant les étapes
- de dimensionnement du noyau de bobine d'arrêt ferromagnétique (310) et des trois enroulements primaires (L1, L2, L3) sur une puissance à transférer au maximum en fonction du courant, de la tension et de la fréquence de la puissance à transférer au maximum ;
- d'enroulement des branches de retour (320, 328) avec respectivement un premier enroulement de symétrisation mentionné,
- de branchement en série mutuel dans le même sens des premiers enroulements de symétrisation.

12. Procédé selon la revendication 11, dans lequel
l'enroulement des branches de retour (320, 328) avec les enroulements de symétrisation est effectué de telle manière
qu'un premier flux magnétique variable (Φ₁) dans une première des deux branches de retour avec une première direction ou direction périphérique par rapport au circuit magnétique induit par l'intermédiaire des enroulements de symétrisation dans la seconde des deux branches de retour un deuxième flux magnétique (Φ₂) avec une deuxième direction ou direction périphérique par rapport au circuit magnétique, qui est opposée à la première direction ou direction périphérique.

13. Procédé selon la revendication 12, comprenant en outre les étapes :
- de fonctionnement, en particulier d'alimentation en courant, des enroulements primaires (U, V, W) avec un système de courant de test triphasé,
- de mesure d'une température sur au moins une branche de retour et/ou d'au moins une intensité de courant d'un enroulement de symétrisation mentionné d'une branche de retour,
- de calcul de deuxièmes enroulements de symétrisation en fonction de la température mesurée et/ou du courant mesuré et
- de remplacement des premiers enroulements de symétrisation par les deuxièmes enroulements de symétrisation.

14. Procédé selon la revendication 13, **caractérisé en ce que** les étapes de procédé de la revendication 13 sont répétées de manière itérative dans l'ordre, en particulier jusqu'à ce que la température mesurée et/ou l'intensité de courant mesurée soient inférieures à une valeur maximale et/ou soient supérieures à une valeur minimale.

15. Procédé selon l'une quelconque des revendications 13 ou 14, **caractérisé en ce que** le fonctionnement des enroulements primaires est effectué par une unité génératrice électrique, qui présente plusieurs onduleurs, qui réalisent une sortie d'onduleur commune, à laquelle la bobine d'arrêt triphasée est branchée, ou que le fonctionnement des enroulements primaires est effectué par une unité génératrice électrique selon l'une quelconque des revendications 5 à 9.

16. Procédé selon l'une quelconque des revendications 12 à 15, **caractérisé en ce que** les premiers enroulements de symétrisation sont calculés en fonction d'une tolérance de fabrication du noyau de bobine d'arrêt ferromagnétique de la bobine d'arrêt triphasée et/ou d'une inductance spécifiée par l'usage prévu de la bobine d'arrêt triphasée.

17. Procédé selon l'une quelconque des revendications 11 à 16, **caractérisé en ce que** le noyau de bobine d'arrêt ferromagnétique présente sur au moins une branche de retour mentionnée un entrefer, qui correspond sensiblement à une tolérance de fabrication du noyau de bobine d'arrêt ferromagnétique.
